# EUROPÄISCHE PATENTSCHRIFT

(11) **EP 1 236 643 B1**
(45) Veröffentlichungstag und Bekanntmachung des Hinweises auf die Patenterteilung: **11.01.2006**
(21) Anmeldenummer: 02002097.0
(22) Anmeldetag: 13.02.2002
(51) Int. Cl.: B64G 1/22

(54) **Vorrichtung mit einem im Querschnitt flach zusammengedrückten und der Länge nach aufgerollten Mast**
Device with a mast, folded flat in its cross-section and rolled up in its length
Dispositif avec un mât plié transversalement à plat et enroulé dans sa longueur

(30) Priorität: 28.02.2001 DE 10109529
(43) Veröffentlichungstag der Anmeldung: 04.09.2002
(73) Patentinhaber: Deutsches Zentrum für Luft- und Raumfahrt e.V., 51147 Köln (DE)
(72) Erfinder: Sickinger, Christoph, Dipl.-Ing., 38154 Königslutter (DE); Breitbach, Elmar, Prof. Dr.-Ing.habil, 37075 Göttingen (DE); Herbeck, Lars, Dr.-Ing., 38173 Veltheim (DE)
(74) Vertreter: Rehberg Hüppe + Partner

(56) Entgegenhaltungen:
- EP-A- 0 524 888
- US-A- 6 137 454
- SEBOLDT W. ET AL.: "Ground-Based Demonstration of Solar Sail Technology" 51ST INTERNATIONAL ASTRONAUTICAL CONGRESS, PAPER IAF-00-S.6.11, 2. - 6. Oktober 2000, XP001121394 Rio de Janeiro, Brazil

## Beschreibung

Die Erfindung bezieht sich auf eine Vorrichtung mit den Merkmalen des Oberbegriffs des Ptentanspruchs 1.

Das Gebiet der Erfindung sind Vorrichtungen mit ultraleichten entfaltbaren Masten, die typischerweise aus Kohlefaserverbundwerkstoffen hergestellte, sogenannte CFK-Masten sind. Derartige Vorrichtungen werden in der Weltraumtechnik beispielsweise für das Aufspannen von Sonnensegeln verwendet. Anforderungen an großen Länge der ausgerollten Masten im Weltraum platzsparend transportierbar sind und eine geringe Masse aufweisen. Daneben muß das Ausrollen der Masten absolut zuverlässig erfolgen und die Masten müssen in ihrer ausgerollten Stellung mit maximaler Steifigkeit definiert gegenüber dem Rest der Vorrichtung ausgerichtet sein.

Bei einer aus "Solar Sail Technology Development and Demonstration" M. Leipold et al. im Jahrbuch 2000, Deutsche Gesellschaft für Luft- und Raumfahrt (DGLR), Leipzig, September 2000 bekannten Vorrichtung sind insgesamt vier Masten mit flach zusammengedrücktem Querschnitt der Länge nach auf eine gemeinsame Trommel aufgewickelt, die drehbar gegenüber dem Rest der Vorrichtung gelagert ist. Dabei finden sich die Füße der Masten innen auf der Trommel und die Spitzen der Masten liegen außen. An den Spitzen der Masten weisen diese schon vor dem Entfalten ihren aufgeweiteten Querschnitt auf, der durch Einsätze im Innenraum der Masten stabilisiert ist. Zum Entfalten der Masten werden Führungsbänder von der Trommel abgewickelt, die zwischen den einzelnen Masten angeordnet sind. Die Masten werden zwischen den Führungsbändern geführt, bis sie ihren aufgeweiteten Querschnitt, d. h. eine ausreichende Steifigkeit erreicht haben. Nach dem vollständigen Abwickeln der Masten von der Trommel muß diese festgestellt werden und es muß auch eine Aufweitung des Querschnitts der Masten an ihren an der Trommel befestigten Füßen ermöglicht werden. Die Gesamtmasse der bekannten Vorrichtung ist relativ groß, weil die Anteile für die Trommel, auf der die Masten aufgewickelt sind, der Antriebe für das Abziehen der Führungsbänder von der Rolle und die Führungsbänder selbst zu berücksichtigen sind. Daneben ist technischer Aufwand für das Fixieren der Trommel nach dem Entfalten der Masten und für die Aufweitungsmöglichkeit des Querschnitts der an der Trommel befestigten Füße der Masten zu berücksichtigen.

Aus der EP-A-0 524 888 ist eine Vorrichtung nach dem Oberbegriff des Patentanspruchs 1 bekannt, bei der ein Mast mit flach zusammengedrücktem Querschnitt der Länge nach auf eine Trommel aufgewickelt ist. Dabei findet sich der Fuß des Masts auf der Trommel und die Spitze des Masts liegt außen. Zum Entfalten des Masts wird die Trommel um eine ortsfeste Drehachse verdreht und dabei der Mast durch eine Führung mit Vorschubwalzen vorgeschoben, wobei sein Querschnitt wieder aufgeweitet wird. Daneben ist aus der EP-A-0 524 888 eine Vorrichtung mit über ihre wesentliche Länge im Querschnitt flach zusammengedrückten und der Länge nach zu Wickeln aufgerollten Masten in Leichtbauweise für ein Sonnensegel bekannt, bei der sich die Füße der Masten außen an dem jeweiligen Wickel und die Spitzen der Masten innen befinden. In diesem Fall sind die Masten schlauchartig und flexibel ausgebildet. Um ihren Querschnitt aufzuweiten, bedarf es äußerer Kräfte in Form einer Druckeinleitung in ihren Innenraum. Diese Druckeinleitung wird auch dazu genutzt, um die Masten zu entfalten, wobei sich die Wickel von den ortsfesten Füßen der Masten weg bewegen.

Die als nächster Stand der Technik betrachtete US-A-6 137 454 zeigt eine Antenne mit einem Mast, der frei von äußeren Kräften einen aufgeweiteten parabelförmigen Querschnitt aufweist und unter Aufbau von Rückstellkräften im Querschnitt flach zusammengedrückt und zu einem Wickel aufgerollt ist, wobei die Spritze des Mastes innen und der Fuß des Mastes außen an dem Wickel angeordnet ist.

Der Erfindung liegt die Aufgabe zugrunde, eine Vorrichtung aufzuzeigen, die bezogen auf die Länge der Masten eine besonders geringe Baugröße und ein besonders geringes Gewicht bei gleichzeitig gegebener hoher Funktionssicherheit aufweist.

Erfindungsgemäß, wird diese Aufgabe durch eine Vorrichtung mit den Merkmalen des Patentanspruchs 1 gelöst.

Bei der neuen Vorrichtung ist es nicht so, daß die Spitze des Mastes frei nach außen vorgeschoben wird. Vielmehr wird der Wickel des Mastes zum Entfalten des Mastes von dem Rest der Vorrichtung wegbewegt. Das Entfalten des Mastes erfolgt dabei im wesentlichen automatisch durch die Rückstellkräfte, die im Querschnitt des Mastes wirken und die eine Wiederaufweitung dieses Querschnitts anstreben, wozu der Wickel freikommen muß. Eingeleitet wird dieser Prozeß am Fuß des Mastes, an dem der Mast schon zu Beginn des Entfaltens einen aufgeweiteten Querschnitt aufweist. Gestartet werden kann das Entfalten des Mastes beispielsweise durch einfaches Freigeben des Wickels des Mastes bei konstant aufgeweitetem Querschnitt am Fuß des Mastes. Bei konstant aufgeweitetem Querschnitt am Fuß des Mastes kann der Fuß des Mastes in einfachster Weise starr und ortsfest in seinem Lager gelagert sein. Der Wickel des Mastes kann bei der neuen Vorrichtung trommellos sein. Es wird dann jegliche Masse für eine Trommel zum Aufwickeln des Mastes eingespart. Gleichzeitig kann auch der innere Wickelrädius des Wickels besonders klein gewählt werden, weil sich bei der neuen Vorrichtung die Spitze des Mastes innen in dem Wickel befindet und die Spitze des Mastes typischerweise einen kleineren Querschnitt und/oder eine kleinere Wandungsstärke des Mastes aufweist als der Fuß des Mastes und somit ohne Zerstörung des Mastes einen kleineren Wickeldurchmesser zuläßt. Hieraus resultiert ein erheblich reduzierter Raumbedarf für den zu dem Wickel aufgewickelten, Mast. Bei einem Mast, dessen Quesrschnitt und/oder Wandstärke zur Spitze des Mastes in irgendeiner Form abnimmt, verhält es sich mit den in der neuen Vorrichtung für das Entfalten des Mastes zur Verfügung stehenden Kräften so, daß diese bei dem größeren Querschnitt mit den größeren Wandungsstärken am Fuß des Mastes groß sind und ausreichen, um den noch großen und schweren Wickel zu bewegen. Bei der Entfaltung des Mastes zur Spitze des Mastes hin nehmen die Kräfte aufgrund des kleiner werdenden Querschnitts / der kleiner werdenden Wandstärke des Mastes ab, aber auch die verbleibende Masse des Wickels wird geringer. Auch insofern stellt die erfindungsgemäße Wickelrichtung des Mastes eine Optimierung dar. Aufwendige Entfaltungseinrichtungen sind für den Mast der neuen Vorrichtung überflüssig, wobei davon ausgegangen ist, daß der Mast nur ein einziges Mal entfaltet wird und nicht wieder aufgerollt werden muß. Dies wäre bei der neuen Vorrichtung nicht ohne weiteres möglich.

Obwohl keine speziellen Entfaltungseinrichtungen bei der neuen Vorrichtung erforderlich sind, weil das Entfalten des Mastes von dem Wickel im wesentlichen auf der über seinen Querschnitt wirkenden Rückstellkraft aus seinem flach zusammengedrückten Zustand beruht, kann das Entfalten des Mastes durch verschiedene Maßnahmen unterstützt werden. Hierzu gehört es, das Lager für den Fuß des Mastes um eine Achse zu verdrehen, die senkrecht zu dem in seiner ausgerollten Stellung befindlichen Mast verläuft. Damit wirken auf die Wickel des Mastes von dem Lager weg gerichtete Zentripetalkräfte, die das Entfalten des Mastes fördern.

Der Innenraum des Mastes kann aber auch an eine Druckgasquelle anschließbar sein, um ihn mit einem Innendruck zu beaufschlagen, der die Wiederaufweitung seines Querschnitts aus der flach zusammengedrückten Stellung unterstützt.

Weiter kann eine Ejektoreinrichtung für das Auswerfen des Wickels in der Längsrichtung des in seiner ausgerollten Stellung befindlichen Mastes vorgesehen sein. Dabei kann es sich um einen Federejektor oder auch um einen pyrotechnischen Ejektor handeln. Durch die auswärts gerichtete Beschleunigung des Wickels bei gleichzeitigem Festhalten des Fußes des Mastes an dem Rest der Vorrichtung wird das Entfalten des Mastes von dem Wickel gefördert.

Um eine Aufweitung des Wickels in radialer Richtung von seiner Wickelachse weg anstelle des gewollten Entfaltens des Mastes von dem Wickel zu unterbinden, kann für den Wickel eine Führung vorgesehen sein, die dieser radialen Aufweitung des Wickels von seiner Wickelachse weg entgegen wirkt. Es handelt sich dabei um eine Führung, die an dem Wickel selbst angeordnet ist und sich mit dem Wickel von dem Rest der Vorrichtung entfernt.

Die Führung kann von dem in seiner ausgerollten Stellung befindlichen Mast sogar frei sein, weil sie für den entfalteten Mast nicht mehr benötigt wird. Um die von dem Mast freie Führung von dem Mast zu entfernen, kann zwischen der Führung und der Spitze des Mastes eine Abwurfeinrichtung vorgesehen sein, die die Führung von der Spitze des Mastes und dem Rest der Vorrichtung weg wegschleudert.

Als weitere Variante einer Entfaltungseinrichtung für den Mast kann bei der neuen Vorrichtung ein Drehantrieb zwischen der Führung und dem Wickel des Mastes vorgesehen sein. Ein solcher Drehantrieb kann von einer mechanischen Feder nach Art eines Uhrwerks mit Energie versorgt werden. Dabei kann wie bei einem Uhrwerk auch eine mechanische Unruhe vorgesehen sein, um den Zeitablauf des Entwicklungsvorgang zu kontrollieren.

Bei der neuen Vorrichtung kann die Spitze des Mastes direkt mit einer Ecke eines Sonnensegels verbunden sein, das gleichzeitig mit dem Entfalten des Mastes entfaltet wird. Es ist aber auch möglich, an der Spitze des Mastes eine Umlenkrolle anzubringen, um über diese nach dem Entfalten des Mastes ein Sonnensegel mit einem Zugseil aufzuziehen.

Vorzugsweise sind bei der neuen Vorrichtung mehrere jeweils zu einem Wickel aufgerollte Masten vorgesehen. Dabei ist die Anordnung der Wickel aufgrund der Grundkonstruktion der neuen Vorrichtung frei und kann sich vollständig an einer Minimierung des Raumbedarfs oder einer Anpassung an vorhandene Freiräume orientieren. Insbesondere muß die Anordnung der Wickel keine der Anzahl der Wickel entsprechende Rotationssymetrie um eine zentrale Achse der Anordnung aufweisen, wie dies bei mehreren auf eine Trommel aufgewickelten Masten in aller Regel der Fall ist.

Die Erfindung wird im folgenden anhand von Ausführungsbeispielen näher erläutert und beschrieben, dabei zeigt:
- Fig. 1: die wesentlichen Teile der neuen Vorrichtung in einer Ausführungsform mit einem zu einem Wickel aufgerollten Mast ,
- Fig. 2: den aufgeweiteten Querschnitt des Mastes gemäß Fig. 1,
- Fig. 3: den Mast gemäß Fig. 1 beim Entfalten mit einer zusätzlichen Führung für den Wickel,
- Fig. 4: einer erste Anordnung von vier zu vier Wickeln aufgewickelten Masten einer Ausführungsform der neuen Vorrichtung in vier verschiedenen Ansichten,
- Fig. 5: eine zweite Anordnung von vier zu vier Wickeln aufgewickelten Masten in vier verschiedenen Ansichten,
- Fig. 6: eine dritte Anordnung von vier zu vier Wickeln aufgewickelten Masten in vier verschiedenen Ansichten,
- Fig. 7: eine vierte Anordnung von vier zu vier Wickeln aufgewickelten Masten in vier verschiedenen Ansichten,
- Fig. 8: eine auf der Anordnung gemäß Fig. 5 aufbauende konkrete Ausführungsform der neuen Vorrichtung beim Entfalten der Masten und gleichzeitigen Entfalten eines Solarsegels,
- Fig. 9: die Vorrichtung gemäß Fig. 8 nach dem Entfalten des Solarsegels und
- Fig. 10: ein durch einen Kreis in Fig. 9 hervorgehobenes, vergrößertes Detail von Fig. 9.

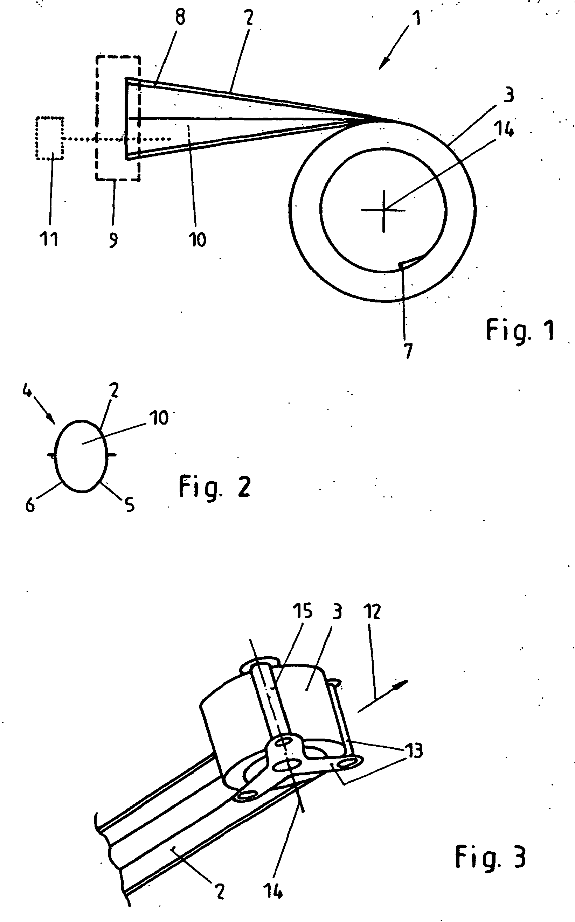

Fig. 1 zeigt eine Vorrichtung 1 mit einem Mast 2, der über seine wesentliche Länge zu einem Wickel 3 aufgewickelt ist. Der Mast 2 weist im nicht aufgerollten Zustand frei von äußeren Kräften den in Fig. 2 dargestellten Querschnitt 4 auf, der aber flach zusammendrückbar ist, wobei der Mast 2 seine Knicksteifigkeit verliert und zu dem Wickel 3 aufrollbar ist. Der Mast 2 besteht dazu aus einem Kohlefaserverbundwerkstoff 5, der die verformbare Wandung 6 des Mastes 2 ausbildet. Der Mast 2 zeichnet sich insgesamt durch eine besonders geringe Masse verglichen mit seiner entfalteten Länge und der im aufgeweiteten Zustand seines Querschnitts 4 erzielten Steifigkeit aus. In der Vorrichtung 1 gemäß Fig. 1 ist der Mast 2 platzsparend zu dem Wickel 3 zusammengerollt, wobei sich die Spitze 7 des Mastes innen in dem Wickel 3 befindet und der Mast 2 am Außenumfang des Wickels 3 in seinen Fuß 8 übergeht. Für den Fuß 8 des Mastes 2 ist ein Lager 9 vorgesehen, in dem der Fuß 8 mit dem entfalteten Querschnitt 4 des Mastes 2 gemäß Fig. 2 gelagert ist. Hierdurch wird eine Entfaltung des Mastes 2 durch Förderung der in dem flach zusammengedrückten Teil des Mastes 2 enthaltenen Rückstellkräfte eingeleitet. Zur tatsächlichen Entfaltung des Mastes 2 kommt es aber nur dann, wenn der Wickel 3 freigegeben wird und sich weg von dem Lager 9 für den Fuß 8 des Mastes 2 bewegen kann. Bei einer solchen Bewegung weitet sich der Querschnitt des abgewickelten Teils des Mastes 2 auf und hierdurch wird der verbleibende Wickel 3 weiter von dem Lager 9 für den Fuß 8 weg beschleunigt bis der gesamte Mast 2 von dem Wickel 3 abgewickelt ist. Hierfür reichen im Prinzip die Rückstellkräfte des Querschnitts 4 des Mast 2 aus, die gleichzeitig mit der Restmasse des Wickels 3 von dem Fuß 8 zu der Spitze 7 des Mastes aufgrund eines in dieser Richtung abnehmenden Querschnitts 4 und einer abnehmenden Stärke der Wandung 6 kleiner werden. Es ist aber auch möglich, das Entfalten des Mastes 2 nach Freigabe des Wickels 3 noch zusätzlich zu fördern. Hierfür kann beispielsweise ein nicht dargestellter Ejektor für das Auswerfen des Wickels 3 von dem Lager 9 für den Fuß 8 weg vorgesehen sein. Ein solcher Ejektor kann ein Federejektor sein oder auch ein pyrotechnischer Ejektor. Angedeutet ist in Fig. 1 die Möglichkeit, den Innenraum 10 des Mastes 2 mit einer Druckgasquelle 11 zu verbinden, um das Wiederaufweiten des flach zusammengedrückten Querschnitts des Mastes 2 durch eine Druckbeaufschlagung des Innenraums 10 zu fördern.

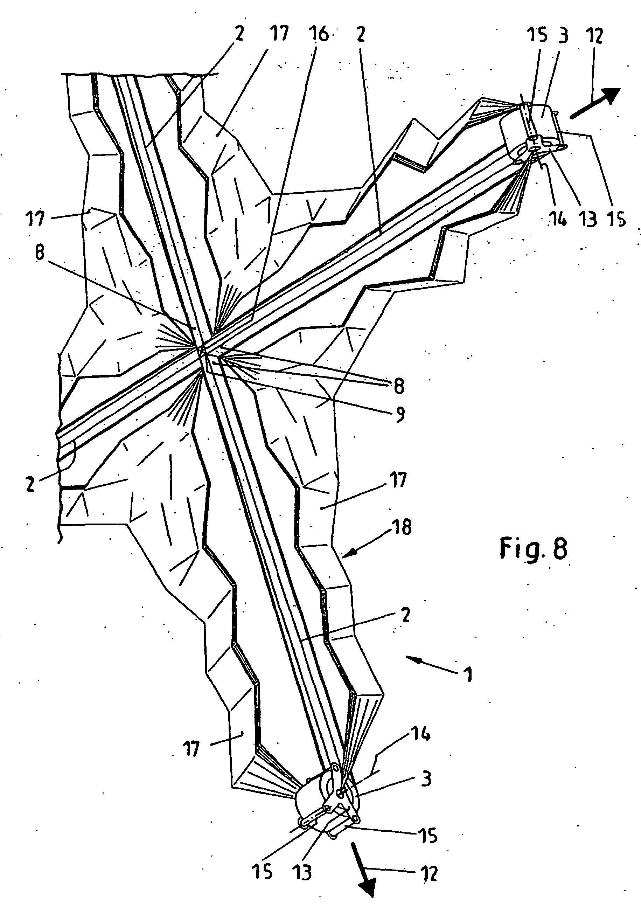

Fig. 3 zeigt den Mast 2 beim Abwickeln von dem Wickel 3, wobei sich der Wickel 3 in Richtung eines Pfeils 12 bewegt. Zusätzlich zu den Details aus Fig. 1 ist eine Führung 13 für den Wickel 3 vorgesehen, die verhindert, daß sich der Wickel 3 aufgrund der Rückstellkräfte im Querschnitt des Mastes 2 in radialer Richtung von einer Wickelachse 14 des Wickels 3 weg aufweitet. Zumindest verhindern Führungsrollen 15 der Führung 13 die Aufweitung des Wickels 3 in dieser Richtung über ein bestimmtes Maß hinaus. Zwischen der Führung 13 und dem Wickel 3 des Mastes 2 kann als weitere hier nicht dargestellte Variante einer Entfaltungseinrichtung für den Mast ein nach Art eines Uhrwerks konstruierter Drehantrieb zum Abwickeln des Mastes 2 aus der Führung 13 vorgesehen sein. Weitere Ausführungen zu der Führung 13 werden weiter unten im Zusammenhang mit den Fig. 8 bis 10 gemacht werden.

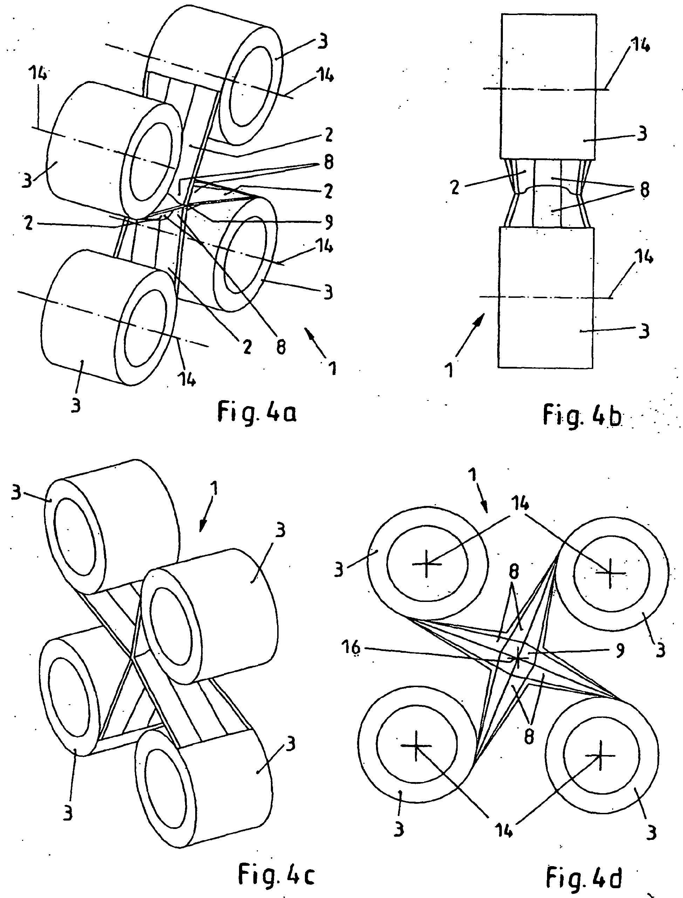

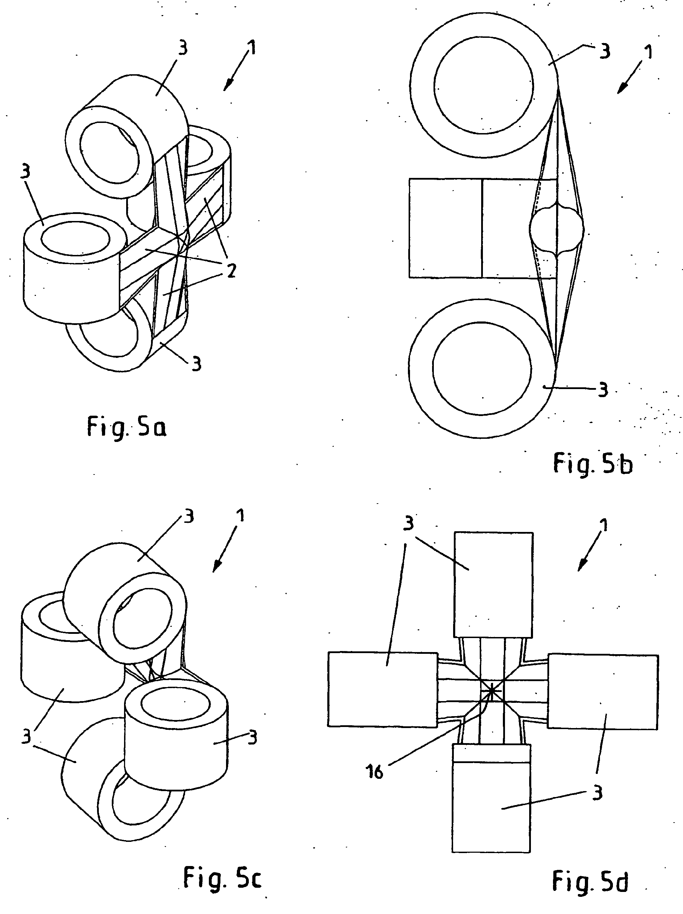

Die in Fig. 4 dargestellte Anordnung einer Ausführungsform der Vorrichtung 1 mit vier Masten 2 weist eine vierfache Rotationssymmetrie um eine zentrale Achse 16 durch das Lager 9 für die Füße 8 der Masten 2 auf, wobei die Wickelachsen 14 aller vier Wickel 3 parallel zueinander angeordnet sind. Hiervon unterscheidet sich die Anordnung von vier zu vier Wickeln 3 aufgewickelten Masten 2 bei der Vorrichtung 1 gemäß Fig. 5 dadurch, daß die Wickelachsen 14 in einer Ebene verlaufen und nur paarweise parallel zueinander ausgerichtet sind. Dem entspricht es, daß die Masten 2 gemäß Fig. 5 relativ zu ihrer Orientierung in Fig. 4 um 90° um ihre Haupterstreckungsrichtungen gegenüber dem Lager 9 verdreht sind.

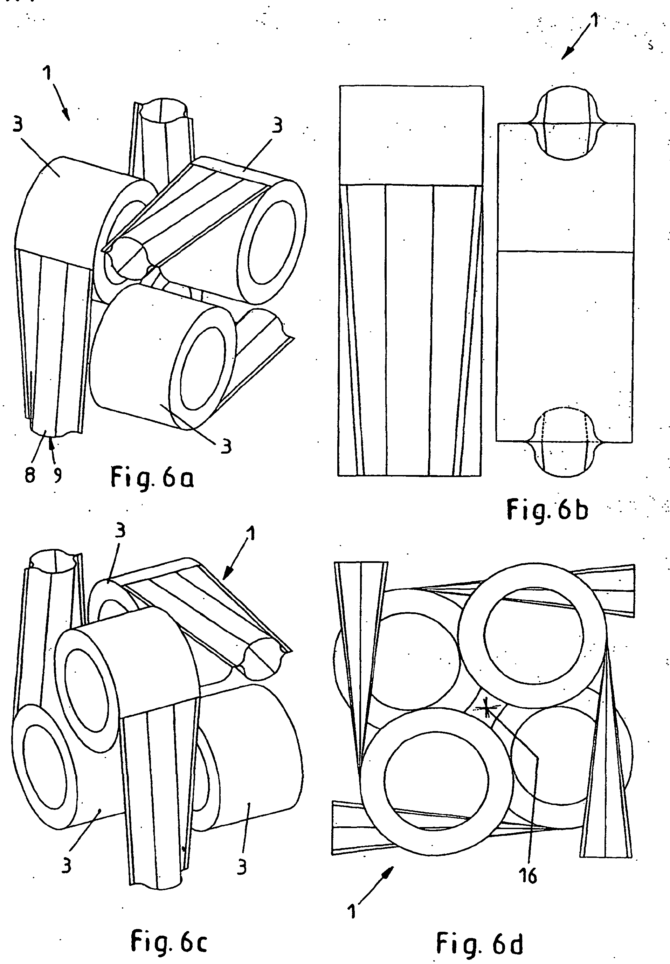

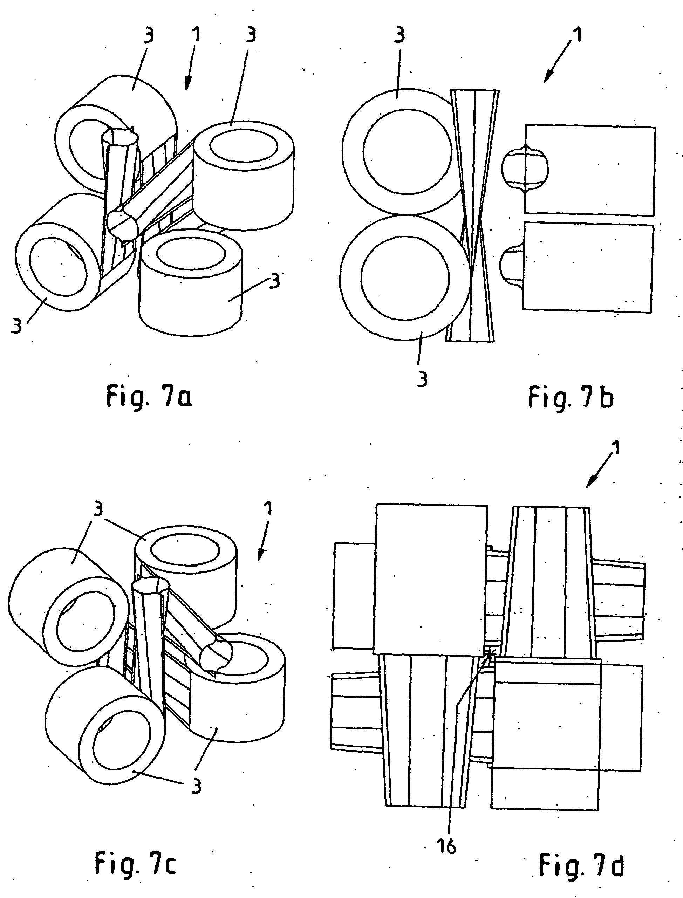

Bei der Anordnung von vier zu vier Wickeln 3 aufgewickelten Masten 2 gemäß Fig. 6 ist nur eine zweifache Rotationssymmetrie um die zentrale Achse 16 der Anordnung gegeben. Dabei sind die Wickel 3 zu zwei in Richtung der Achse 16 versetzten Paaren angeordnet und die hier nicht näher dargestellten Lager 9 für die Füße 8 der Masten 2 finden sich in den vier Ecken der Anordnung. Gemäß Fig. 7 ist ebenfalls eine zweifache Rotationssymmetrie der Anordnung von vier zu vier Wickeln 3 aufgerollten Masten 2 um die zentrale Achse 16 gegeben, wobei aber noch eine andere Anordnung der Wickel 3 im Raum gewählt ist, bei der die Füße 8 der Masten 2 paarweise einander entgegengerichtet und die beiden Paare der Füße 8 in der Mitte der Anordnung überkreuz angeordnet sind.

Bei jeder Anordnung gemäß den Figuren 4 bis 7 können durch Drehen der Anordnung um die zentrale Achse 16 Zentripetalkräfte auf die Wickel 3 hervorgerufen werden, die eine Entfernung der Wickel 3 von den Lagern 9 für die Füße 8 der Masten 2 fördern, um das Entfalten der Masten 2 zu unterstützen. Die konkrete Wahl der Anordnung der Wickel 3 und der Lager 8 in der neuen Vorrichtung 1 sollte von dem zur Verfügung stehenden Raum für die Vorrichtung 1 abhängig gemacht werden. Es sind auch noch andere Varianten der Anordnung möglich, als hier in den Fig. 4 bis 7 dargestellt.

Fig. 8 zeigt eine Vorrichtung 1 basierend auf der Anordnung von vier Masten 2 gemäß Fig. 5 mit Führungen 13 gemäß Figur 3 für die Wickel 3 zum Aufspannen eines aus vier Teilsegeln 17 bestehenden Sonnensegels 18. Die Teilsegel sind jeweils im Bereich des Lagers 9 für die Füße 8 der Masten 2 und über die Führungen 13 der Wickel 3 an zwei benachbarten Masten 2 befestigt. Beim Entfalten der Masten 2 durch Abrollen von den Wickeln 3 wird gleichzeitig das Sonnensegel 18 entfaltet.

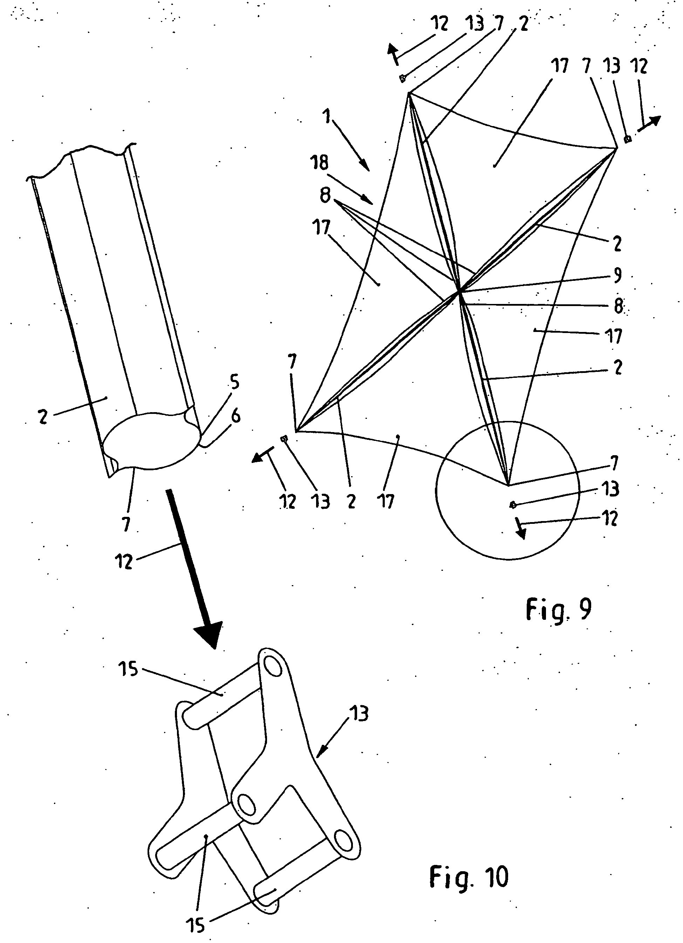

Fig. 9 und die Vergrößerung gemäß Fig. 2 zeigen das Sonnensegel 18 nach der Entfaltung bei einer modifizierten Ausführungsform der Vorrichtung 1 gemäß Fig. 8. Hier ist jedes Teilsegel nicht an der Führung 13 für den jeweiligen Wickel vorgesehen, sondern anderweitig an der Spitze 7 des jeweiligen Mastes 2 befestigt. Die Führung 13 wird dabei von der Spitze 7 des abgewickelten Mastes 2 frei und bewegt sich weiter in Richtung des Pfeils 12 von den Lagern 9 für die Füße 8 der Masten 2 weg. Das heißt, die Führungen 13 werden abgeworfen, da sie nicht mehr benötigt werden. Dies ist in Fig. 10 vergrößert dargestellt, wobei die Befestigung der Teilsegel 17 an der Spitze 7 des dargestellten Mastes 2 weggelassen ist. Durch den Abwurf der Führung 13 wird bei der neuen Vorrichtung 1 zumindest nach dem Entfalten der Masten 2 noch weitere Masse eingespart. Zum Abwerfen der Führung 13 kann zusätzlich zu der Trägheit der Führung 13 in Richtung des Pfeils 12 eine Federkraft oder dergl. freigesetzt werden, was aber hier nicht dargestellt ist.

### BEZUGSZEICHENLISTE

- 1: - Vorrichtung
- 2: - Mast
- 3: - Wickel
- 4: - Querschnitt
- 5: - Kohlefaserverbundwerkstoff
- 6: - Wandung
- 7: - Spitze
- 8: - Fuß
- 9: - Lager
- 10: - Innenraum

- 11: - Druckgasquelle
- 12: - Pfeil
- 13: - Führung
- 14: - Wickelachse
- 15: - Führungsrolle
- 16.: - Achse
- 17: - Teilsegel
- 18: - Sonnensegel

## Patentansprüche

1. Vorrichtung (1) mit mindestens einem Mast (2) in Leichtbauweise für ein Sonnensegel oder dergleichen, der frei von äußeren Kräften einen aufgeweiteten Querschnitt (4) aufweist und der in der Vorrichtung (1) zunächst über seine wesentliche Länge unter Aufbau von Rückstellkräften im Querschnitt flach zusammengedrückt und der Länge nach zu einem Wickel (3) aufgerollt ist, und mit Mitteln zum Entfalten des Mastes (2) aus dem Wickel (3) in eine ausgerollte Stellung mit über seine gesamte Länge wieder aufgeweitetem Querschnitt (4), wobei jeder Mast (2) so zu einem eigenen Wickel (3) aufgerollt ist, dass die Spitze (7) des Mastes (2) innen in dem Wickel (3) und der Fuß (8) des Mastes (2) außen an dem Wickel (3) angeordnet ist, **dadurch gekennzeichnet dass** die Mittel zum Entfalten ein Lager (9) für den Fuß (8) des Mastes (2) aufweisen, in dem der Mast (2) zu Beginn des Entfaltens einen aufgeweiteten Querschnitt (4) hat um die Rückstellkräfte des Querschnitts (4) für das Abwickeln des Masts (2) von dem Wickel (3) zu nutzen.

2. Vorrichtung nach Anspruch 1, **dadurch gekennzeichnet, daß** das Lager (9) ortsfest vorgesehen ist.

3. Vorrichtung nach Anspruch 1, **dadurch gekennzeichnet, daß** das Lager (9) um eine Achse (16) verdrehbar ist, die senkrecht zu dem in seiner ausgerollten Stellung befindlichen Mast (2) verläuft.

4. Vorrichtung nach einem der Ansprüche 1 bis 3, **dadurch gekennzeichnet, daß** der Innenraum (10) des Mastes (2) an eine Druckgasquelle (11) anschließbar ist.

5. Vorrichtung nach einem der Ansprüche 1 bis 4, **dadurch gekennzeichnet, daß** eine Ejektoreinrichtung für das Auswerfen des Wickels (3) in der Längsrichtung des in seiner ausgerollten Stellung befindlichen Mastes (2) vorgesehen ist.

6. Vorrichtung nach einem der Ansprüche 1 bis 5, **dadurch gekennzeichnet, daß** eine Führung (13) für den Wickel (3) vorgesehen ist, die einer radialen Aufweitung des Wickels (3) von seiner Wickelachse (14) weg entgegenwirkt.

7. Vorrichtung nach Anspruch 6, **dadurch gekennzeichnet, daß** die Führung (13) von dem in seiner ausgerollten Stellung befindlichen Mast frei (2) ist.

8. Vorrichtung nach Anspruch 7, **dadurch gekennzeichnet, daß** zwischen der Führung (13) und der Spitze (7) des Mastes (2) eine Abwurfeinrichtung vorgesehen ist.

9. Vorrichtung nach einem der Ansprüche 1 bis 8, **dadurch gekennzeichnet, daß** die Spitze (7) des Mastes mit einer Ecke eines Sonnensegels (18) verbindbar ist.

## Claims

1. An apparatus (1) comprising at least one boom (2) of lightweight construction provided for a solar sail or the like, which, when free of outer forces, has an enlarged cross-section (4) and which, at first in the device (1), is flatly compressed over a major portion of its length upon building up restoring forces and rolled up along its length to a roll (3), and means for unfolding the boom (2) out of the roll (3) into an unrolled position showing an enlarged cross section over its entire length again, each boom (2) being rolled up to an own roll (3) in such a way that the tip (7) of the boom (2) is located within the roll (3) and that the foot (8) of the boom (2) is located at the outside of the roll, **characterized in that** the means for unfolding comprise a bearing (9) for the foot (8) of the boom (2), in which the boom (2) has an enlarged cross-section (4) at the beginning of the unfolding process to make use of the restoring forces of the cross-section (4) for unrolling the boom (2) from the roll (3).

2. The apparatus of claim 1, **characterized in that** the bearing (9) is stationary.

3. The apparatus of claim 1, **characterized in that** the bearing (9) is rotatable about an axis (16) which is perpendicular with respect to said boom (2) being in its unrolled position.

4. The apparatus of any of the claims 1 to 3, **characterized in that** the interior (10) of the boom (2) is connectable to a source of compressed gas (11).

5. The apparatus of any of the claims 1 to 3, **characterized in that** an ejector unit is provided for ejecting the roll (3) in the longitudinal direction of said boom (2) being in its unrolled position.

6. The apparatus of any of the claims 1 to 3, **characterized in that** a guide (13) is provided for the roll (3), which prevents a radial expansion of the roll (3) away from its rolling axis (14).

7. The apparatus of claim 6, **characterized in that** the guide (13) is free of the boom (2) being in its unrolled position.

8. The apparatus of claim 7, **characterized in that** a release unit is arranged between the guide (13) and the tip (7) of the boom (13).

9. The apparatus of claim 8, **characterized in that** the tip (7) of the boom is connectable to a corner of a solar sail (18).

## Revendications

1. Dispositif (1) comportant au moins un mât (2) de construction légère pour une voile solaire ou élément similaire, lequel a une section (4) déployée à l'état non sollicité par des forces extérieures et lequel, dans le dispositif (1), est d'abord replié à plat transversalement sur sa longueur essentielle moyennant l'application de forces de rappel et est enroulé dans sa longueur pour former une bobine (3), et comportant des moyens destinés à déployer le mât (2) hors de la bobine (3) dans une position déroulée avec une section (4) à nouveau déployée sur toute sa longueur, chaque mât (2) étant enroulé pour former sa propre bobine (3), de telle sorte que la pointe (7) du mât (2) est agencée à l'intérieur de la bobine (3) et le pied (8) du mât (2) est agencé à l'extérieur de la bobine (3), **caractérisé en ce que** les moyens de déploiement comportent un palier (9) pour le pied (8) du mât (2), le mât (2) ayant au début du déploiement une section (4) déployée en vue d'utiliser les forces de rappel de la section (4) pour le déroulement du mât (2) de la bobine (3).

2. Dispositif selon la revendication 1, **caractérisé en ce que** le palier (9) est prévu localement fixe.

3. Dispositif selon la revendication 1, **caractérisé en ce que** le palier (9) est rotatif autour d'un axe (16) qui est perpendiculaire au mât (2) situé dans sa position déroulée.

4. Dispositif selon l'une quelconque des revendications 1 à 3, **caractérisé en ce que** l'espace intérieur (10) du mât (2) peut être raccordé à une source de gaz sous pression (11).

5. Dispositif selon l'une quelconque des revendications 1 à 4, **caractérisé en ce qu'**il est prévu un éjecteur destiné à éjecter la bobine (3) dans le sens longitudinal du mât (2) situé dans sa position déroulée.

6. Dispositif selon l'une quelconque des revendications 1 à 5, **caractérisé en ce qu'**il est prévu un guidage (13) pour la bobine (3), qui s'oppose à un déploiement radial de la bobine (3) en s'écartant de son axe d'enroulement (14).

7. Dispositif selon la revendication 6, **caractérisé en ce que** le guidage (13) est libéré du mât (2) situé dans sa position déroulée.

8. Dispositif selon la revendication 7, **caractérisé en ce qu'**il est prévu un dispositif d'éjection entre le guidage (13) et la pointe (7) du mât (2).

9. Dispositif selon l'une quelconque des revendications 1 à 8, **caractérisé en ce que** la pointe (7) du mât (2) peut être assemblée à un angle d'une voile solaire (18).
